# DEMANDE DE BREVET EUROPEEN

(11) **EP 2 689 826 A1**
(43) Date de publication de la demande: **29.01.2014**
(21) Numéro de dépôt: 13172117.7
(22) Date de dépôt: 14.06.2013
(51) Int. Cl.: B01D 53/94, F02D 41/02

(54) **Systeme de post-traitement de gaz d'echappement**

(30) Priorité: 26.07.2012 FR 1257257
(71) Demandeur: PEUGEOT CITROËN AUTOMOBILES SA, 78140 Velizy-Villacoublay (FR)
(72) Inventeur: MATTHESS, NILS, 92300 LEVALLOIS PERRET (FR); LESUEUR, JEAN-NICOLAS, 92250 LA GARENNE COLOMBES (FR)

(57) **Abrégé**

L'invention porte sur un système de post-traitement (5) de gaz d'échappement (2) destiné à équiper une ligne d'échappement (4) d'un moteur à combustion interne (1) dont est pourvu un véhicule automobile. Le système de post-traitement (5) comprend un premier catalyseur (6) apte à réaliser une réaction du gaz à l'eau :

CO + H₂O → CO₂ + H₂

## Description

L'invention porte sur un système de post-traitement de gaz d'échappement qui équipe une ligne d'échappement d'un véhicule automobile. Elle a aussi pour objet une telle ligne d'échappement, ainsi qu'un procédé de mise en oeuvre dudit dispositif de post-traitement.

Le document EP - 2,072,774 décrit un moteur à combustion interne pourvu d'une ligne d'échappement pour évacuer vers un environnement extérieur des gaz d'échappement produits par le moteur à combustion interne. La ligne d'échappement est équipée d'un système de post-traitement des gaz d'échappement pour éviter un rejet de composants nocifs, contenus à l'intérieur des gaz d'échappement, vers l'environnement extérieur. Ledit système comprend un dispositif amont de catalyse trois-voies qui est placé en amont d'un dispositif aval de catalyse, selon un sens d'écoulement des gaz d'échappement à l'intérieur de la ligne d'échappement. Une arrivée d'air est ménagée entre le dispositif amont de catalyse trois-voies et le dispositif aval de catalyse, de telle sorte que le dispositif aval de catalyse admet un mélange air/carburant aval qui comprend un excès d'air par rapport à un mélange air/carburant amont admis à l'intérieur du dispositif amont de catalyse trois-voies. Le dispositif aval de catalyse est préférentiellement un catalyseur d'oxydation, ou bien un filtre à particules catalytique, voire un convertisseur catalytique trois-voies. L'arrivée d'air est en relation avec un conduit d'air qui s'étend entre l'arrivée d'air et une prise d'air ménagée sur un conduit d'alimentation en air du moteur à combustion interne. Le conduit d'air est équipé d'une valve de contrôle pour autoriser ou interdire une injection d'air depuis la prise d'air vers l'arrivée d'air. Une injection d'air à travers l'entrée d'air vise à permettre une conversion de monoxyde carbone CO et d'hydrocarbures imbrulés HC à l'intérieur du dispositif aval de catalyse.

Un tel système de post-traitement s'avère encombrant, lourd et complexe, notamment en raison de la présence du conduit d'air et d'une pompe à air qui équipe ce dernier. De plus, un tel système de post-traitement requiert un diagnostic de fonctionnement fréquent ce qui est contraignant et source de perte de temps.

Par ailleurs, et d'une manière générale, un tel système de post-traitement mérite d'être amélioré, notamment lorsqu'un mélange air/carburant admis à l'intérieur du moteur à combustion interne est enrichi en carburant. Un tel enrichissement est fréquemment nécessaire pour répondre à des sollicitations en mode transitoire du moteur à combustion interne lors d'une demande de fortes charges lors de phases d'accélération par exemple. Un tel enrichissement est aussi fréquemment nécessaire pour diminuer le plus possible une température des gaz d'échappement afin de protéger des éléments présents à l'échappement, tels que des soupapes, des collecteurs, des sondes de gaz, des catalyseurs, des filtres ou analogues.

Un but de la présente invention est de proposer un système de post-traitement de gaz d'échappement produits par un moteur à combustion interne d'un véhicule automobile, le système de post-traitement équipant une ligne d'échappement en relation avec le moteur à combustion interne, le système de post-traitement étant apte à oxyder des composants nocifs, monoxyde de carbone CO et hydrocarbures imbrulés HC, préalablement à leur rejet vers un environnement extérieur au véhicule automobile, notamment dans des conditions de fonctionnement du moteur à combustion interne imposant un enrichissement en carburant d'un mélange air/carburant admis à l'intérieur du moteur à combustion interne, un tel système de post-traitement étant peu encombrant, léger et simple à réaliser.

Un autre but de la présente invention est de proposer un tel système de post-traitement qui évite d'avoir à abaisser la température des gaz d'échappement ce qui a pour conséquence un abaissement d'une performance du moteur à combustion interne, ce qu'il est préférable d'éviter.

On peut souligner également que les caractéristiques des nouveaux cycles d'homologation qui restent encore à définir (WLTC pour « Worldwide harmonized Light-duty Test Cycle » et RDE pour « Real Driving Emissions ») risquent d'exiger beaucoup des moteurs puisqu'ils devraient faire la part belle aux conditions transitoires, c'est-à-dire aux fortes accélérations.

Un système de la présente invention est un système de post-traitement de gaz d'échappement destiné à équiper une ligne d'échappement d'un moteur à combustion interne dont est pourvu un véhicule automobile.

Selon la présente invention, le système de post-traitement comprend un premier catalyseur apte à réaliser une réaction du gaz à l'eau [10] :

CO + H₂O → CO₂ + H₂ [10]

Le premier catalyseur comprend avantageusement un premier composant comprenant de l'oxyde de cérium CeO₂.

Le premier catalyseur comprend préférentiellement un deuxième composant comprenant indifféremment du platine Pt et/ou du rhodium Rh.

Le premier catalyseur comprend préférentiellement un troisième composant comprenant indifféremment de l'or Au déposé sur des oxydes de titane, de zirconium ou de fer, du cobalt Co déposé sur de l'alumine, du ruthénium Ru déposé sur de la cérine (CeOₓ) ou un mélange fer-cérine (Fe-CeOₓ), et/ou du cuivre Cu sur de l'oxyde de titane.

Le premier catalyseur comprend par exemple un filtre à particules enduit du premier composant et de l'un quelconque au moins des deuxième composant et troisième composant.

Le système de post-traitement comprend avantageusement un deuxième catalyseur qui est constitué d'un catalyseur trois-voies.

Le premier catalyseur et le deuxième catalyseur forment par exemple un ensemble catalytique monobloc et solidaire.

Une ligne d'échappement de la présente invention est principalement reconnaissable en ce que, la ligne d'échappement équipant un moteur à combustion interne dont est pourvu un véhicule automobile, la ligne d'échappement est pourvue d'un tel système de post-traitement.

Le premier catalyseur est avantageusement disposé en aval du deuxième catalyseur selon un sens d'écoulement des gaz d'échappement à l'intérieur de la ligne d'échappement.

Un procédé de mise en oeuvre d'un tel système de post-traitement est préférentiellement mis en oeuvre quand un mélange air/carburant admis à l'intérieur du moteur à combustion interne est enrichi en carburant.

D'autres caractéristiques et avantages de la présente invention apparaîtront à la lecture de la description qui va en être faite d'exemples de réalisation, en relation avec les figures des planches annexées, dans lesquelles :
- Les figures 1 à 3 représentent des variantes respectives d'un système de post-traitement de la présente invention équipant une ligne d'échappement d'un véhicule automobile ;
- La figure 4 est un graphe représentant l'impact de la teneur en CO sur le WGS, représentant la conversion de CO en fonction de la température d'entrée des gaz sous mélange réactionnel CO/H₂O/N₂;
- La figure 5 est un graphe représentant l'impact du vieillissement sur le WGS, en représentant la conversion du CO en fonction de la température d'entrée des gaz ;
- La figure 6 représente une « fenêtre » de richesse du catalyseur trois voies, représentant l'efficacité de conversion des polluants CO, HC et NOₓ en fonction de la richesse des gaz à une température à laquelle la conversion est maximale.

Sur les figures, un moteur à combustion interne 1 équipe un véhicule automobile pour permettre un déplacement de ce dernier. Le moteur à combustion interne 1 est indifféremment le seul moyen de propulsion du véhicule automobile ou bien est constitutif d'un moteur hybride. Le moteur à combustion interne 1 est un moteur thermique essence. Le moteur à combustion interne 1 produit des gaz d'échappement 2 qui sont évacués vers un environnement extérieur 3 par l'intermédiaire d'une ligne d'échappement 4 dont est pourvu le moteur à combustion interne 1.

Les gaz d'échappement 2 contiennent des composants nocifs qu'il est nécessaire de convertir préalablement à un rejet des gaz d'échappement 2 vers l'environnement extérieur 3. A cet effet, la ligne d'échappement 4 est équipée d'un système de post-traitement 5 des gaz d'échappement 2.

Le système de post-traitement 5 et/ou le moteur à combustion interne 1 comprennent des éléments, tels que des soupapes, des collecteurs, des sondes de gaz, des catalyseurs, des filtres ou analogues, qui présentent des tenues thermiques qui limitent une plage d'utilisation de ces derniers. Typiquement, une température T des gaz d'échappement 2 excédant 950°C à 1000°C est suscepible de provoquer des dommages irréversibles du système de post-traitement 5 et/ou le moteur à combustion interne 1. Pour éviter un tel endommagement, il est connu d'enrichir en carburant un mélange d'air/carburant admis à l'intérieur du moteur à combustion interne 1. Un coefficient de richesse R du mélange air/carburant est susceptible d'atteindre, voire de dépasser, une valeur de 1,2, ce qui provoque un abaissement de la température T des gaz d'échappement en dessous de 950°C, i.e. la température de protection composants. Il en résulte que les gaz d'échappement 2 sont réducteurs, puisque riches en hydrocarbures imbrûlés HC et en monoxyde de carbone CO. Il est aussi connu d'enrichir un tel mélange pour obtenir une puissance en mode transitoire, lors de fortes sollicitations du moteur à combustion interne 1, à partir de fortes accélérations du véhicule automobile.

Selon la présente invention, le système de post-traitement 5 est apte à éliminer le monoxyde de carbone CO en milieu réducteur.

A cet effet, le système de post-traitement 5 comprend un premier catalyseur 6 dédié au traitement d'émissions de monoxyde de carbone CO en mélange riche, c'est-à-dire lorsque le coefficient de richesse R est supérieur à 1, notamment de l'ordre de 1,2. Un tel premier catalyseur 6 est apte à mettre en oeuvre une réaction du gaz à l'eau [10]. Le premier catalyseur 6 est par exemple dénommé catalyseur WGS selon l'acronyme anglo-saxon pour « water gas shift » :

CO + H₂O → CO₂ + H₂ [10]

Pour ce faire, le premier catalyseur 6 comprend un premier composant C1 comprenant de l'oxyde de cérium CeO₂ qui permet à partir d'une réaction de déstockage d'oxygène [11] de libérer de l'oxygène, notamment en milieu réducteur, pour permettre une oxydation du monoxyde de carbone CO et des hydrocarbures imbrûlés :

2 CeO₂ → Ce₂O₃ + ½ O₂ [11]

Le premier catalyseur 6 comprend aussi un deuxième composant C2 comprenant du platine Pt qui favorise également la réaction du gaz à l'eau [10]. En substitution et/ou en complément du platine Pt, le premier catalyseur est susceptible de comprendre du rhodium Rh qui favorise également la réaction du gaz à l'eau [10], mais d'une manière moins efficace que le platine Pt, couramment d'un facteur deux.

Selon d'autres variantes de réalisation, le premier catalyseur 6 est susceptible de comporter un troisième composant C3 en substitution et/ou en complément du deuxième composant C2, tel que :
- de l'or Au déposé sur des oxydes de titane, de zirconium ou de fer,
- du cobalt Co déposé sur de l'alumine,
- du ruthénium Ru déposé sur de la cérine (CeOₓ) ou un mélange fer-cérine (Fe-CeOₓ),
- du cuivre Cu sur de l'oxyde de titane.

Selon d'autres variantes de réalisation, le premier catalyseur 6 comprend un catalyseur métallique, tel qu'un catalyseur Cu/Zn pour une température T des gaz d'échappement 2 basse, telle que de l'ordre de 600°C, ou bien tel qu'un catalyseur Fe/Cr plus efficace à une température T des gaz d'échappement 2 plus haute, telle que de l'ordre de 900°C. Pour de très hautes températures T des gaz d'échappement 2, typiquement supérieures à 1 000 °C, le catalyseur métallique comprend par exemple du platine Pt et/ou du rhodium Rh qui sont plus adaptés pour résister à des phénomènes de frittage et/ou de volatilisation.

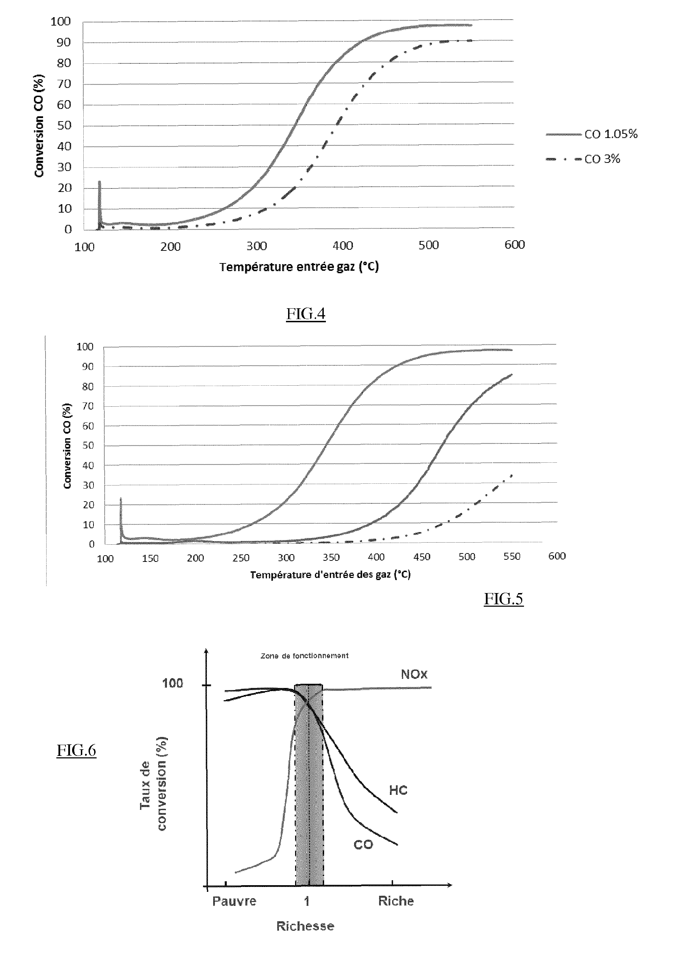

Ces dispositions sont telles que la réaction du gaz à l'eau [10] remplace une réaction d'oxydation directe du monoxyde de carbone CO par l'oxygène O₂, lorsque l'oxygène O₂ vient à manquer notamment dans le cas d'un surenchérissement en carburant du mélange air/carburant, en vue de protéger les éléments précités, tels que les soupapes, les collecteurs, les sondes de gaz, les catalyseurs, les filtres ou analogues, ou bien en vue d'une forte charge imposée au moteur à combustion interne 1. Typiquement, la réaction du gaz à l'eau [10] est susceptible de se produire à partir d'une température T des gaz d'échappement 2 comprise entre 200°C et 300°C, et présente un rendement satisfaisant pour une température T des gaz d'échappement 2 supérieure à 450°C. Cela va bien évidemment dépendre des conditions opératoires (débit, température, composition des gaz et notamment teneur en CO) ainsi que de l'état du catalyseur (cf. graphiques ci-après). Les résultats présentés aux figures 4 et 5 ont été obtenus au banc gaz synthétique (moyen permettant de mesurer l'efficacité d'un catalyseur à convertir les polluants en fonction de la température des gaz ainsi que de leur composition) avec un catalyseur « trois-voies » commercial non optimisé pour le WGS. Ils mettent en valeur l'efficacité du catalyseur à convertir, grâce à la vapeur d'eau le monoxyde de carbone en l'absence d'oxygène. Ils montrent l'impact de la teneur en CO sur sa propre réaction d'oxydation (« auto-inhibition du CO ») ainsi que l'impact du vieillissement.

La figure 4 représente les courbes dites de « light-off » du monoxyde de carbone (CO) d'évolution de la conversion du CO en fonction de la température des gaz pour deux teneurs en CO (essais réalisés au banc gaz synthétique sous un mélange réactionnel binaire de type CO-H₂O dans N₂). La courbe en traits pleins correspond à un essai réalisé avec 1,05% de CO dans N₂ + 10% H₂O. La courbe en traits discontinus correspond à unessai réalisé avec 3% de CO dans N₂ + 10% H₂O.

La figure 5 représente les courbes dites de « light off » du CO, montrant l'évolution de la conversion du CO en fonction de la température des gaz pour trois états différents (essais réalisés au banc gaz synthétique sous un mélange réactionnel binaire de type CO-H₂O dans N2). La courbe en Trait plein bleu la plus haute dans le graphe correspond à un échantillon de catalyseur neuf (sans pré-traitement) ; l'autre courbe en trait plein correspond à un échantillon de catalyseur vieilli 4h/980°C sous azote et eau ; la courbe en trait discontinu correspond à un échantillon de catalyseur vieilli 4h/1200°C sous aṙ et eau.

La réaction du gaz à l'eau [10] est par exemple le résultat d'un mécanisme dit " associatif " ou " formiate " comprenant les réactions suivantes :

**CO**+*→**CO*** **(a)**

**H**₂**O**+2*→**OH***+**H*** **(b)**

**OH***+**CO***→**HCOO***+* **(c)**

**HCOO***+*→**CO**₂*+**H*** **(d)**

**CO**₂*→**CO**₂+* **(e)**

2**H***→**H**₂+2* **(f)**

La réaction du gaz à l'eau [10] est par exemple encore le résultat d'un mécanisme dit " régénératif " comprenant les réactions suivantes :

**H**₂**O**+*→**O***+**H**₂ **(g)**

**CO**+**O*****→CO**₂+* **(h)**

Dans lesquelles * représente un site actif d'un des métaux cités ci-dessus.

Le mécanisme dit " associatif " semble être le mécanisme le plus probable dans le cas d'un premier catalyseur 6 à base de métaux précieux, tandis que le mécanisme " régénératif " a été proposé pour un premier catalyseur 6 au cuivre. L'adsorption de CO, selon la réaction (a), et la décomposition des formiates, selon la réaction (d), ont lieu sur le métal, alors que l'activation de la molécule d'eau et l'insertion du groupe OH se réalisent sur les sites actifs du premier catalyseur 6. Ce mécanisme bi-fonctionnel exige une concentration en monoxyde de carbone CO à la surface du métal suffisante et une interaction métal - monoxyde de carbone CO pas trop forte afin de permettre la migration du monoxyde de carbone CO vers les sites actifs du premier catalyseur 6. Il existe une interaction métal - monoxyde de carbone CO optimale pour que la réaction soit rapide.

Pour ce qui est des énergies d'activation de la réaction du premier catalyseur 6, c'est-à-dire l'énergie qu'il faut apporter au système (généralement sous forme de chaleur) pour que la réaction du gaz à l'eau [10] se produise, les énergies d'activation sont du même ordre de grandeur quel que soit le métal actif utilisé, soit environ 80 kJ/mol à 96 kJ/mol. La présence d'oxyde de cérium CeOₓ incorporé dans la structure du premier catalyseur 6 réduit en revanche cette énergie d'activation à environ 50 kJ/mol, ce qui a pour conséquence d'en augmenter la cinétique, c'est-à-dire la vitesse de conversion du monoxyde de carbone CO par la vapeur d'eau H₂O.

Un mélange réactionnel compris à l'intérieur du premier catalyseur 6 contient non seulement 10% d'eau mais également 10% à 14% de dioxyde de carbone CO₂, sans tenir compte de celui produit par les différentes réactions catalytiques. Or, la réaction du gaz à l'eau [10] est une réaction réversible dite « équilibrée » et le dioxyde de carboneCO₂ est un des deux produits que la réaction du gaz à l'eau [10] forme. Ce dernier peut, de ce fait, inhiber légèrement la conversion de monoxyde de carbone CO par l'eau. Mais plus que l'inhibition de la réaction du gaz à l'eau [10] par le dioxyde de carbone CO₂, la réaction du gaz à l'eau [10] présente un optimum qui dépend de sa constante d'équilibre (K_{eq}) et donc des teneurs en monoxyde de carbone CO, en eau H₂O, en hydrogène H₂ et dioxyde de carbone CO₂ qui la composent en sus des caractéristiques propres au premier catalyseur 6 considéré. Il existe donc une plage de température T à respecter pour ne pas perdre en efficacité de conversion du monoxyde de carbone CO. Cette plage d'efficacité pour laquelle le premier catalyseur 6 est apte à convertir le monoxyde de carbone CO au moins à 50% (on parle alors de température d'amorçage ou température de « light-off ») est à déterminer au laboratoire pour former une base de données. Une telle base de données, qui dépend de la nature du premier catalyseur 6 et des concentrations en monoxyde de carbone CO principalement (sachant que le dioxyde de carbone CO₂ et l'eau H₂O sont généralement en quantité constante en sortie du moteur à combustion interne 1 et l'hydrogène H₂ est en quantité moindre par rapport à celle du monoxyde de carbone CO) permet d'optimiser le fonctionnement du premier catalyseur 6. Notons que les essais réalisés au banc gaz synthétiques ne permettent pas de mettre en évidence le fait que la réaction du gaz à l'eau est une réaction en théorie équilibrée. Les niveaux thermiques atteints pendant les essais (550°C en entrée catalyseur) ne sont probablement pas suffisants pour voir baisser l'efficacité en WGS.

Le premier catalyseur 6 est associé à un deuxième catalyseur 7 formé d'un catalyseur trois-voies qui est à même de réaliser à la fois l'oxydation du monoxyde de carbone CO, des hydrocarbures imbrûlés HC et la réduction des oxydes d'azote NOₓ. Le deuxième catalyseur 7 est le système de post-traitement des émissions gazeuses polluantes réglementées des moteurs à essence. Pour être efficace et réaliser l'ensemble des réactions catalytiques dont les principales sont représentées ci-après (numérotées de 1 à 8), le deuxième catalyseur 7 a besoin d'être porté à une température élevée, dite température d'amorçage (souvent supérieure à 250 °C), de conditions de richesse de gaz bien spécifiques, les conditions de richesse étant favorables lorsque le coefficient de richesse R est proche de 1.

Ce dernier point est illustré par la figure 6 montrant l'efficacité de conversion des polluants Co, HC et NOx en fonction de la richesse des gaz à une température où la conversion est maximale.

Ci-après les principales réactions rencontrées en catalyse « trois-voies » :

*CO*+½*O*₂*→CO*₂ (1)

*CₓH_{y}*+(*x*+(*^{y}*/₄))*O*₂→*xCO*₂+*^{y}*/₂*H*₂*O* (2)

*CO*+*H*₂*O*→*CO*₂+*H*₂ (3)

*CₓH_{y}*+2*xH*₂*O*→*xCO*₂+(2*x*+*^{y}*/₂)*H*₂ (4)

*H*₂+½*O*₂→*H*₂*O* (5)

*NO*+*CO*→½*N*₂+*CO*₂ (6)

*NO*+*H*₂→½*N*₂+*H*₂*O* (7)

*CₓH_{y}*+(2*x*+(*^{y}*/₂))*NO*→(*x*+(*^{y}*/₄))*N*₂+*^{y}*/₂*H*₂*O*+*xCO*₂ (8)

Le deuxième catalyseur 7 est préférentiellement placé à l'intérieur de la ligne d'échappement 4 en amont du premier catalyseur 6 selon un sens d'écoulement 8 des gaz d'échappement 2 à l'intérieur de la ligne d'échappement 4. L'intérêt d'une telle configuration est de permettre un amorçage des réactions de conversion qui ont lieu dans le deuxième catalyseur 7 lorsque le coefficient de richesse R est proche de 1. La configuration inverse augmente un temps de mise en action du deuxième catalyseur 7 et laisse passer en conséquence plus de composants nocifs vers l'environnement extérieur 3. L'autre avantage d'une telle configuration est le besoin de limiter la température dans le premier catalyseur 6 puisque l'efficacité maximale de la réaction du gaz à l'eau [10] est atteinte pour des températures voisines de 450°C. Au-delà d'une certaine température, l'efficacité décroit théoriquement de nouveau. Il faut donc s'assurer que les conditions thermiques rencontrées lors des phases d'enrichissement en carburant du mélange air/carburant sont optimales (i.e. aux environs de 450°C) pour le traitement des émissions de monoxyde de carbone CO. On peut, d'ailleurs, imaginer un système de refroidissement du premier catalyseur 6 ou plus généralement de gestion thermique de la ligne d'échappement 4, pour déterminer au préalable un intervalle de température dans lequel le premier catalyseur 6 doit se trouver pour assurer un rendement maximum sachant qu'il faudra également tenir compte du vieillissement du premier catalyseur 6. Une série d'essais réalisables en laboratoire permet de déterminer une base de données qui définit l'intervalle de température dans lequel le premier catalyseur 6 doit se trouver en fonction de son état, le vieillissement de ce dernier induisant une augmentation de la température d'amorçage des réactions catalytiques et plus particulièrement de la réaction du gaz à l'eau [10]. Cette base de données ainsi constituée peut rejoindre une mémoire du contrôle-moteur pour aider à la gestion thermique de la ligne d'échappement 4 lors des enrichissements moteur. Un travail sur l'architecture de la ligne d'échappement 4 peut s'avérer nécessaire. Par exemple, on peut aménager une distance entre le premier catalyseur 6 et le deuxième catalyseur 7 plus ou moins importante en fonction de la thermique requise pour un fonctionnement optimal du premier catalyseur 6.

L'invention concerne donc également un procédé de la gestion thermique de ce premier catalyseur, pour en limiter l'échauffement quand la richesse du mélange air/carburant alimentant le moteur dépasse 1 et va jusqu'à, par exemple 1,2, par un moyen de contrôle commande qui vient contrôler et piloter la thermique du premier catalyseur selon la richesse du mélange air/carburant et selon l'état de vieillissement du catalyseur, pour assurer son fonctionnement optimal. Ce moyen de contrôle commande peut faire partie de ou être associé au moyen de contrôle commande du moteur lui-même.

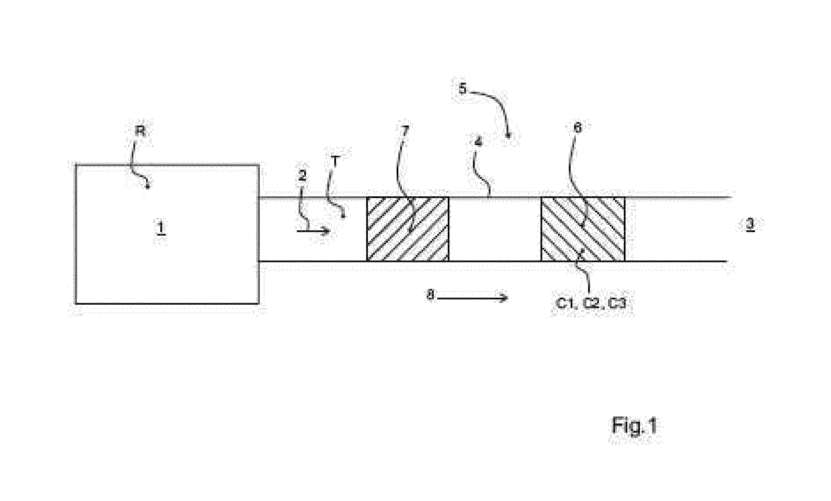

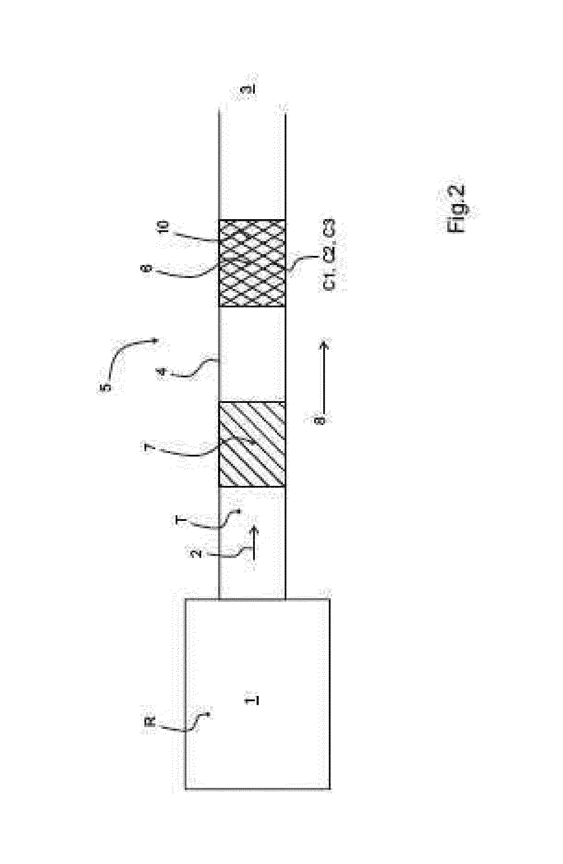

Sur les figures 1 et 2, le deuxième catalyseur 7 est interposé entre le moteur à combustion interne 1 et le premier catalyseur 6, en étant placé à distance de l'un et de l'autre.

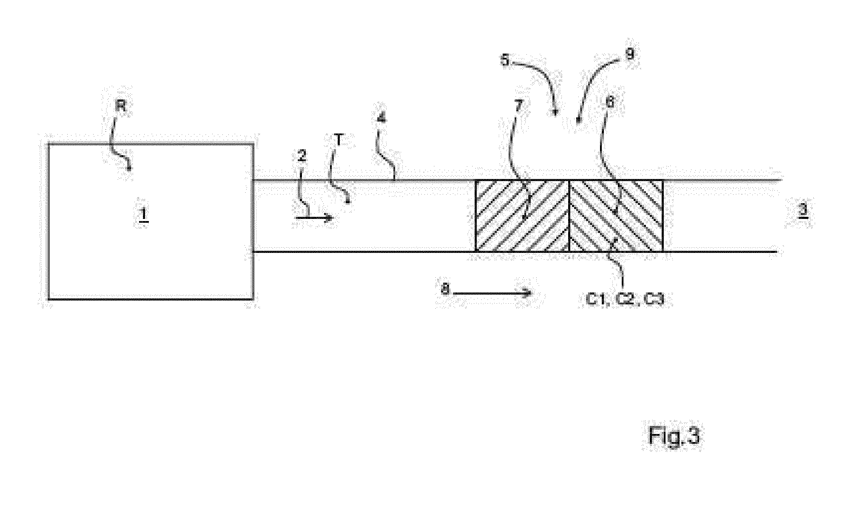

Sur la figure 3, le premier catalyseur 6 et le deuxième catalyseur 7 sont associés en un ensemble catalytique 9 qui est monobloc et solidaire, le premier catalyseur 6 formant une sortie des gaz d'échappement 2 à l'intérieur de l'ensemble catalytique 9 et le deuxième catalyseur 7 formant une entrée des gaz d'échappement 2 à l'intérieur de l'ensemble catalytique 9. L'ensemble catalytique forme alors un catalyseur zoné, i.e. un catalyseur ayant pour spécificité d'offrir sur un même support différentes fonctions bien distinctes. En effet, en entrée de l'ensemble catalytique 9, on retrouve le deuxième catalyseur 7 qui convertit les composants nocifs lorsque le coefficient de richesse R est proche de 1. On retrouve ensuite dans cet ensemble catalytique 9 le premier catalyseur 6 qui est donc situé en aval du deuxième catalyseur 7 selon le sens d'écoulement 8 des gaz d'échappement 2 à l'intérieur de la ligne d'échappement 4 et qui convertit, lorsque le coefficient de richesse R est supérieur à 1, le monoxyde de carbone CO et l'eau H₂O en dioxyde de carbone CO₂ et en hydrogène H₂ selon la réaction du gaz à l'eau [10]. Cette configuration est préférable à la configuration inverse pour les raisons évoquées précédemment, i.e. l'intervalle de température à cibler. Cette configuration reste toutefois moins intéressante en termes d'efficacité de conversion du monoxyde de carbone CO lors des enrichissements du moteur à combustion interne 1 que la configuration présentée en figure 1 mais offre l'avantage de sa compacité.

Sur la figure 2, le premier catalyseur 6 comprend un filtre à particules 10 imprégné d'une enduction des composants C1, C2 et C3 qui participent à la conversion du monoxyde de carbone CO en dioxyde de carbone CO₂. Le filtre à particules 10 est destiné à retenir des particules, des suies ou analogues contenues à l'intérieur des gaz d'échappement 2 préalablement à leur évacuation vers l'environnement extérieur 3. Cette solution permet de réduire les émissions de monoxyde de carbone CO tout en éliminant les particules des gaz d'échappement 2. En outre, l'ajout de platine Pt notamment pour le premier catalyseur 6 aide à la combustion des suies et donc à la régénération du filtre à particules 10 ainsi qu'à l'élimination des émissions de monoxyde de carbone CO et d'hydrocarbures imbrûlés HC qui sont produites lorsque le coefficient de richesse R est de l'ordre de 1.

Le filtre à particules 10 est préférentiellement métallique et est relié à une résistance électrique permettant de maintenir l'ensemble au bon niveau thermique pour à la fois :
- régénérer les suies accumulées à l'intérieur d'un média filtrant que comprend le filtre à particules 10 (présence d'O₂ obligatoire, ceci étant résolu par des coupures d'injection qui assurent une régénération en continue),
- réaliser la réaction du gaz à l'eau [10] dans les meilleures conditions de fonctionnement,
- éliminer les émissions de monoxyde de carbone CO et d'hydrocarbures imbrûlés HC qui ont échappé au deuxième catalyseur 7 situé en amont du filtre à particules 10 (typiquement dans le cas de forts débits, voire à froid, puisque la résistance chauffante permet d'accélérer l'amorçage des réactions d'oxydation).

Les niveaux thermiques ciblés pour la régénération des particules (aux environs de 500°C) sont proches des niveaux thermiques pourlesquels le rendement de la réaction du gaz à l'eau [10] est optimal. Les deux sont donc compatibles dans un même système.

Une solution préférée est donc de disposer d'un deuxième catalyseur 7 qui est placé en amont du filtre à particules 10 selon ledit sens d'écoulement 8 et qui contient le premier catalyseur 6 pour traiter les gaz d'échappement 2 issus du moteur à combustion interne 1, notamment constitutif d'un groupe propulseur hybride. Une telle solution est en effet plus particulièrement appropriée à une hybridation essence qui est susceptible de générer davantage de particules (du fait des nombreux démarrages après fonctionnement en mode électrique) que les moteurs conventionnels tout en présentant des risques similaires d'enrichissement.

## Revendications

1. Système de post-traitement (5) de gaz d'échappement (2) destiné à équiper une ligne d'échappement (4) d'un moteur à combustion interne (1) dont est pourvu un véhicule automobile, **caractérisé en ce que** le système de post-traitement (5) comprend un premier catalyseur (6) apte à réaliser une réaction du gaz à l'eau
CO + H₂O → CO₂ + H₂
avec une gestion thermique de la ligne d'échappement (4), pour déterminer au préalable un intervalle de température dans lequel ledit premier catalyseur (6) doit se trouver pour assurer un rendement maximum, en prenant également en compte le vieillissement dudit premier catalyseur (6).

2. Système de post-traitement (5) selon la revendication précédente, **caractérisé en ce que** la gestion thermique maintient ledit premier catalyseur à une température voisine de 450°C.

3. Système de post-traitement (5) selon la revendication précédente, **caractérisé en ce que** la gestion thermique est réalisée lors des phases d'enrichissement en carburant du mélange air/carburant alimentant le moteur.

4. Système de post-traitement (5) selon la revendication précédente, **caractérisé en ce que** les phases d'enrichissement correspondent à des richesses supérieures à 1, notamment jusqu'à 1,2.

5. Système de post-traitement (5) selon la revendication précédente, **caractérisé en ce que** la gestion thermique comprend un système de refroidissement du premier catalyseur (6).

6. Système de post-traitement (5) selon l'une des revendications précédentes, **caractérisé en ce que** l'intervalle de température dans lequel ledit premier catalyseur (6) doit se trouver pour assurer un rendement maximum est déterminé par l'établissement préalable d'une base de données obtenue par des essais en fonction de son état de vieillissement, ladite base de données étant stockée dans une mémoire du contrôle moteur.

7. Système de post-traitement (5) selon la revendication précédente, **caractérisé en ce que** le premier catalyseur (6) comprend un premier composant (C1) comprenant de l'oxyde de cérium CeO_{2.}

8. Système de post-traitement (5) selon l'une des revendications précédentes, **caractérisé en ce que** le premier catalyseur (6) comprend un deuxième composant (C2) comprenant indifféremment du platine Pt et/ou du rhodium Rh.

9. Système de post-traitement (5) selon l'une des revendications précédentes, **caractérisé en ce que** le premier catalyseur (6) comprend un troisième composant (C3) comprenant indifféremment de l'or Au déposé sur des oxydes de titane, de zirconium ou de fer, du cobalt Co déposé sur de l'alumine, du ruthénium Ru déposé sur de la cérine (CeOₓ) ou un mélange fer-cérine (Fe-CeOₓ), et/ou du cuivre Cu sur de l'oxyde de titane.

10. Système de post-traitement (5) selon les revendications 7, 8 et 9, **caractérisé en ce que** le premier catalyseur (6) comprend un filtre à particules (10) enduit du premier composant (C1) et de l'un au moins des deuxième composant (C2) et troisième composant (C3).

11. Système de post-traitement (5) selon l'une des revendications précédentes, **caractérisé en ce que** le système de post-traitement (5) comprend un deuxième catalyseur (7) qui est constitué d'un catalyseur trois-voies.

12. Système de post-traitement (5) selon l'une des revendications précédentes, **caractérisé en ce que** la distance entre le premier (6) catalyseur et le deuxième (7) catalyseur est choisie en fonction de l'intervalle de température dans lequel ledit premier catalyseur (6) doit se trouver pour assurer un rendement maximum.

13. Système de post-traitement (5) selon la revendication 11 ou 12, **caractérisé en ce que** le premier catalyseur (6) et le deuxième catalyseur (7) forment un ensemble catalytique (9) monobloc et solidaire.

14. Ligne d'échappement (4) équipant un moteur à combustion interne (1) dont est pourvu un véhicule automobile, **caractérisée en ce que** la ligne d'échappement (4) est pourvue d'un système de post-traitement (5) selon l'une des revendications précédentes.

15. Procédé de mise en oeuvre d'un système de post-traitement (5) selon l'une des revendications 1 à 13, **caractérisé en ce qu'**un mélange air/carburant admis à l'intérieur du moteur à combustion interne (1) est enrichi en carburant.
